# EUROPÄISCHE PATENTANMELDUNG

(11) **EP 0 701 189 A1**
(43) Veröffentlichungstag der Anmeldung: **13.03.1996**
(21) Anmeldenummer: 94112707.8
(22) Anmeldetag: 13.08.1994
(51) Int. Cl.: G05D 16/06

(54) **Druckminderer**

(71) Anmelder: DruVa-Armaturen GmbH, D-69214 Eppelheim (DE)
(72) Erfinder: Bauer, Horst, D-69493 Hirschberg / Bergstrasse (DE)
(74) Vertreter: Kehl, Günther, Dipl.-Phys.

(57) **Zusammenfassung**

Druckminderer mit einem in einem Gehäuse (1) angeordneten Ventil (2), das einen Ventilsitz (3) und einen in Richtung auf den Ventilsitz (3) vorgespannten Regelschieber (4) aufweist und das Innere des Gehäuses in einen stromaufwärts des Ventils (2) gelegenen mit einem Einlaß (5) verbundenen Hochdruckraum (6) und einen stromabwärts des Ventils (2) gelegenen, mit einem Auslaß (7) verbundenen Niederdruckraum (8) unterteilt, und mit einer auf den Regelschieber (4) wirkenden Membran (9), die durch den im Niederdruckraum (8) herrschenden variablen Druck beweglich ist, um in Abhängigkeit von dem im Niederdruckraum (8) herrschenden Druck die Bewegung des Regelschiebers (4) zu steuern.

Um einen besonders kleinbauenden und kostengünstig herzustellenden Druckminderer zu schaffen ist vorgesehen, daß die Membran (9) elastisch ausgebildet ist und eine Eigensteifigkeit aufweist, die ausreichend groß ist, um den Druck im Niederdruckraum (8) durch elastische Verformung zu kompensieren.

## Beschreibung

Die Erfindung bezieht sich auf einen Druckminderer mit einem in einem Gehäuse angeordneten Ventil, das einen Ventilsitz und einen in Richtung auf den Ventilsitz vorgespannten Regelschieber aufweist und das Innere des Gehäuses in einen stromaufwärts des Ventils gelegenen, mit einem Einlaß verbundenen Hochdruckraum und einen stromabwärts des Ventils gelegenen, mit einem Auslaß verbundenen Niederdruckraum unterteilt, und mit einer auf den Regelschieber wirkenden Membran, die durch den im Niederdruckraum herrschenden variablen Druck beweglich ist, um in Abhängigkeit von dem im Niederdruckraum herrschenden Druck die Bewegung des Regelschiebers zu steuern.

Ein Druckminderer dieser Art ist beispielsweise aus der EP-A-0 220 599 bekannt. Bei Druckminderern dieser bekannten Art ist die Membran an ihrer dem Niederdruckraum abgewandten Seite durch eine Feder belastet, deren Vorspannung durch eine Verstellspindel einstellbar ist. Von der Seite des Niederdruckraumes aus wirkt auf die Membran eine Kraft, die sich aus dem Produkt des Druckes im Niederdruckraum multipliziert mit der Fläche der Membran ergibt. Von der Gegenseite wirkt auf die Membran die Kraft der Feder. Bei Veränderung einer der beiden Kräfte und einer daraus resultierenden Verschiebung des Kräftegleichgewichtes bewegt sich die Membran entsprechend und überträgt ihre Bewegung auf den Regelschieber, der - je nach Richtung der Gleichgewichtsverschiebung - sich in Richtung der Offenstellung oder in Richtung der Schließstellung bewegt, um so durch Verstärkung oder Drosselung der Fluidzufuhr den Gleichgewichtszustand wiederherzustellen.

Es sind auch Druckminderer bekannt geworden, bei denen die Kraft auf die Membran auf der dem Niederdruckraum abgewandten Seite durch Druckluft erzeugt wird, die in eine Kolbenbetätigungskammer eingeleitet wird (US-PS 2 806 481).

Druckminderer dieser Art weisen den Nachteil auf, daß sie relativ groß bauen und teuer herzustellen sind. Dies gilt vor allem für Druckminderer mit Vorspannleder und Federdom, aber auch für solche mit einer druckluftbeaufschlagten Kolbenbetätigungskammer.

Der Erfindung liegt die Aufgabe zugrunde, einen Druckminderer der eingangs genannten Art zu schaffen, der sich durch kompakte Bauweise und reduzierte Herstellungskosten auszeichnet.

Diese Aufgabe ist dadurch gelöst, daß die Membran elastisch ausgebildet ist und eine Eigensteifigkeit aufweist, die ausreichend groß ist, um den Druck im Niederdruckraum durch elastische Verformung zu kompensieren.

Gemäß der Maßnahme nach der Erfindung wird die Membran so ausgebildet, daß sie in der Lage ist, den Druck im Niederdruckraum aufzunehmen, ohne daß die unterstützende Belastung durch die Kraft einer Vorspannfeder oder eines Druckluftpolsters zwingend erforderlich wäre. Baulich aufwendige Maßnahmen, wie beispielsweise das Vorsehen einer Vorspannfeder mit Verstellspindel in einem Federdom, die sowohl kostenaufwendig als auch platzbeanspruchend sind, können somit entfallen. Es wurde gefunden, daß die Eigenelastizität einer Stahlmembran die Funktion einer Vorspannfeder übernehmen kann, wobei festzustellen ist, daß die Membran trotz ihrer hohen Eigensteifigkeit in der Lage ist, auch geringe Druckänderungen im Niederdruckraum zu detektieren und in entsprechende, den Regelschieber betätigende Bewegungen umzusetzen.

Nach einer vorteilhaften Weiterbildung der Erfindung ist vorgesehen, daß an der Membran ein einstellbares, auf den Regelschieber gerichtetes Teil angeordnet ist. Durch Einstellen dieses Teiles kann der effektive, das heißt, für die Betätigung des Regelschiebers wirksame Abstand zwischen dem Regelschieber und der Membran vergrößert oder verkleinert werden. Wird das einstellbare Teil durch Einstellung in Richtung auf den Regelschieber bewegt, so ist im Niederdruckraum ein größerer Druck erforderlich, um durch Verformung der Membran den Regelschieber in seine Schließposition zu bringen. Der Druck im Niederdruckraum wird daher durch die beschriebene Einstellung vergrößert. Bewegt man durch Einstellung dagegen das einstellbare Teil in der entgegengesetzten Richtung, also weg von dem Regelschieber, so wird ein kleinerer Druck im Niederdruckraum ausreichen, um durch Verformung der Membran den Regelschieber in seine Schließstellung zu bringen. Der Druck im Niederdruckraum fällt somit. Durch Einstellen des auf den Regelschiebers gerichteten Teiles kann somit der Ausgangsdruck oder Hinterdruck des Druckminderers eingestellt werden.

Als einstellbares, auf den Regelschieber gerichtetes Teil eignet sich beispielsweise eine Schraube, die vorzugsweise in einem mit der Membran einstückig gefertigten Zylinder geführt ist. Aufwendige Betätigungsspindeln, wie sie nach dem Stand der Technik erforderlich waren, entfallen. Die Schraube, die keine größeren Kräfte aufnehmen muß als sie zur Betätigung des Regelschiebers erforderlich sind, kann sehr kostengünstig hergestellt werden und ermöglicht dennoch eine präzise Einstellung des Hinterdruckes.

Nach einer weiteren vorteilhaften Ausgestaltung der Erfindung ist der Zylinder koaxial zur Membran, d.h. in ihrer Mitte angeordnet.

Nach einer weiteren, besonders vorteilhaften Ausführungsform der Erfindung weist die Membran im Bereich des Zylinders eine Öffnung auf, über die der Niederdruckraum mit dem Auslaß strömungsmäßig verbunden ist. In diesem Fall muß jedoch der Zylinder an seinem Außenumfang abgedichtet sein.

Um die Strömung des Gases vom Niederdruckraum zum Auslaß nicht zu behindern, ist desweiteren vorgesehen, daß die Schraube eine Axialbohrung aufweist, über die der Niederdruckraum mit dem Auslaß verbunden ist. Diese besonders vorteilhafte Bauweise macht es in vorzüglicher Weise möglich, den Auslaß koaxial zum Regelventil und damit koaxial zur Membran anzuordnen.

Wenn nach einer weiteren vorteilhaften Ausgestaltung der Erfindung der Einlaß ebenfalls koaxial zum Regelventil angeordnet wird, kann der Druckminderer besonders kompakt hergestellt werden. Er läßt bei dieser Bauweise eine modulare Anordnung zu, bei der mehrere Druckminderer derselben oder ähnlicher Art hintereinander geschaltet werden. Wenn beispielsweise der Einlaß mit einem Innengewinde und der Auslaß mit einem Außengewinde versehen ist, können mehrere Druckminderer durch einfaches Verschrauben verbunden werden. Ein aufwendiges Rohrleitungssystem, wie es hierzu nach dem Stand der Technik zur Verbindung der Druckminderer erforderlich war, erübrigt sich.

Nach einer weiteren vorteilhaften Ausgestaltung der Erfindung ist vorgesehen, daß an der dem Niederdruckraum abgewandten Seite der Membran ein Hohlraum vorgesehen ist, der mit einem Kanal in Verbindung steht. Wenn der Kanal mit der Außenluft in Verbindung steht, wird sichergestellt, daß an der dem Niederdruckraum abgewandten Seite der Membran stets der Außenluftdruck anliegt und dieser im Zusammenwirken mit der Eigenelastizität der Membran den Druck im Niederdruckraum kompensiert.

Nach einer anderen Ausführungsform kann jedoch der Hohlraum auch mit Druckluft beaufschlagt werden, um bedarfsweise die Membran in Richtung auf den Niederdruckraum vorzuformen, oder Schwingungen des Regelkreises zu dämpfen.

Die Erfindung wird im folgenden an Hand der in den Figuren schematisch dargestellten Ausführungsbeispiele näher erläutert.

Es zeigt:
- Figur 1:: Einen Druckminderer gemäß einer ersten Ausführungsform der Erfindung im Längsschnitt.
- Figur 2:: Einen Druckminderer gemäß einer zweiten Ausführungsform der Erfindung in Längsschnitt.
- Figur 3:: Einen Druckminderer gemäß einer dritten Ausführungsform der Erfindung im Längsschnitt.

Für gleiche Teile sind jeweils gleiche Bezugszeichen verwendet.

Die Druckminderer weisen folgende Hauptbestandteile auf: ein Gehäuse 1, eine Membran 9, ein Oberteil 15 und ein Ventil 2.

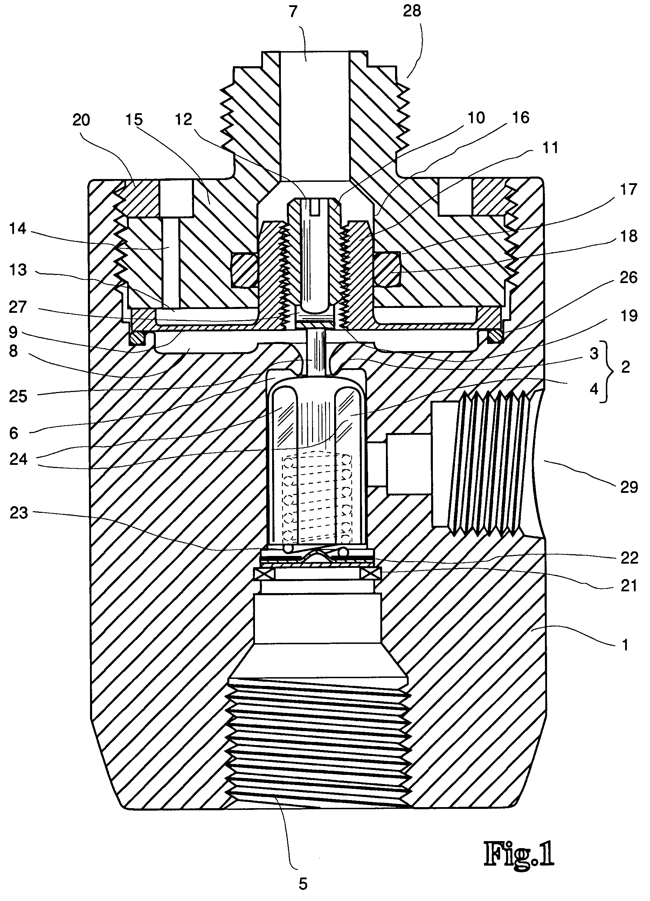

In Figur 1 ist das Gehäuse 1 ist von etwa zylindrischer Form und weist eine durchgehende zentrale Axialbohrung mit unterschiedlichen Durchmessern auf. Die durchgehende Axialbohrung bildet in dem in der Zeichnung unten dargestellten Teil eine Einlaßöffnung 5. Die Axialbohrung ist dort zur Aufnahme eines Einlaßstutzens mit einem Innengewinde versehen. Im Anschluß an den Einlaß 5 in Richtung auf das Innere des Gehäuses 1 weist die Axialbohrung eine Verjüngung auf sowie im Anschluß daran eine umlaufende Nut, in der ein Sprengring 21 angeordnet ist. Der Sprengring legt einen Federzentriersitz 22 in axialer Richtung fest. Der Federzentriersitz 22 trägt eine Druckfeder 23, die in eine zylindrische Sackbohrung des Regelschiebers 4 hineinragt. Der Regelschieber 4, der an vier Seiten Abflachungen 24 aufweist, sitzt in einem zylindrischen Teil der das Gehäuse 1 durchquerenden Axialbohrung, der den Hochdruckraum 6 darstellt. Der Regelschieber 4 wird durch die Druckfeder 23 in Richtung auf einen Ventilsitz 3 vorgespannt, der in dem Gehäuse 1 durch eine Verjüngungsstelle gebildet ist. Durch die Öffnung des kreisrunden Ventilsitzes 3 ragt ein Stift 25 des Regelschiebers 4 und erstreckt sich bis in einen Niederdruckraum 8, der die Form einer flachen Dose aufweist. Am Rand des Niederdruckraums 8 ist eine in Axialrichtung offene umlaufende Nut vorgesehen, in der ein O-Ring 26 angeordnet ist. Der Niederdruckraum 8 ist durch die Membran 9 begrenzt, die dicht gegen den O-Ring 26 gepreßt ist. Die Membran 9 weist die Form einer Kreisscheibe auf. Sie ist an ihrem Randbereich verstärkt. In der Mitte der Membran ist ein hohler Zylinder 11 angeordnet, der innenseitig mit einem Gewinde versehen ist. Im Bereich des Zylinders 11 weist die Membran 9 eine Öffnung 19 auf.

In das Innengewinde des Zylinders 11 greift eine Madenschraube 10 ein. Die Madenschraube ist an ihrem zum Ventil 2 weisenden Ende verjüngt. Sie ist mit einer koaxialen Längsbohrung 12 versehen, die kurz vor dem verjüngten Ende endet. An dem verjüngten Ende ist eine Querbohrung 27 vorgesehen, die die Axialbohrung 12 schneidet. An ihrem dem Regelventil 2 abgewandten Ende ist die Madenschraube 10 geschlitzt, so daß sie mit einem Schraubenzieher ein- und ausgeschraubt werden kann. Die Membran 9 wird durch das Oberteil 15 gegen den O-Ring 26 gepreßt. Das Oberteil 15 ist in eine entsprechende Aufnahme des Gehäuses 1 einschraubbar und wird gegen Herausschrauben durch einen Konterring 20 gesichert.

Das Oberteil 15 ist im wesentlichen zylindrisch und weist eine zentrale Buchse 16 auf, die zur gleitenden Aufnahme des Zylinders 11 der Membran 9 geeignet ist. Mit seinem Außenrand drückt das Oberteil gegen den verstärkten Außenrand der Membran 9, so daß dieser mit dem O-Ring 26 eine dichte Verbindung herstellt. Etwa mittig in Längsrichtung der Buchse 16 des Oberteils 15 ist eine umlaufende Nut 17 vorgesehen, in der eine O-Ring-Dichtung 18 angeordnet ist.

Dadurch, daß der Außenrand der Membran gegenüber dem übrigen Teil der Membran 9 verstärkt ist, bildet sich zwischen dem Oberteil 15, das auf dem verstärkten Außenrand aufliegt, und der Membran 9 ein Hohlraum 13, der über einen Kanal 14 mit der Außenluft in Verbindung steht. An seinem nach außen weisenden Ende weist das Oberteil einen Stutzen auf, der als Auslaß 7 dient. Dieser ist mit einem Außengewinde 28 versehen.

Eine Radialbohrung 29, deren Durchmesser von außen nach innen fortschreitend abgestuft ist, führt zu dem zylindrischen Hochdruckraum 6, in dem der Regelschieber 4 angeordnet ist. In ihrem nach außen gelegenen Teil der Radialbohrung 29 ist diese mit einem Innengewinde versehen.

Der Druckminderer arbeitet wie folgt:
Mit seinem Einlaß 5 ist er in der Regel mit einem Gasflaschenventil oder einer Druckmittelzuleitung verbunden. Sein Auslaß 7 ist an eine Gasentnahmeleitung oder an den Einlaß eines weiteren Druckminderers angeschlossen. Bei dem weiteren Druckminderer kann es sich um einen derselben Bauart handeln. Wie aus der Zeichnung ersichtlich, kann so ein zwei- oder mehrstufiger Druckminderer durch einfaches Aneinanderschrauben zweier oder dreier gleichartiger Druckminderer erzeugt werden. Eine mehrstufige Druckminderung läßt eine feinere Regelung des Ausgangsdruckes zu. Vorallem wird eine weitgehende Unabhängigkeit des Ausgangsdruckes vom Eingangsdruck erreicht.

Es ist ebenso möglich, an dem Ausgangsstutzen 7 einen Druckminderer mit einem von der Bedienungsperson zugänglichen Handrad zur Einstellung des Enddruckes anzuordnen. An der Radialbohrung 29 kann ein Manometer angeschraubt sein, das den Druck im Hochdruckraum (Vordruck) erfaßt. Gewünschtenfalls kann auch dort eine Verzweigungsleitung angeschlossen sein oder die Radialbohrung kann durch einen Stopfen gesperrt sein.

Hochdruckgas strömt über den Einlaß 5, gegebenenfalls über ein zwischengeschaltetes Filter, vorbei an dem Federsitz 22 in den Hochdruckraum 6, in dem sich der Regelschieber 4 befindet. Das Hochdruckgas strömt an den Abflachungen 24 des Regelschiebers 4 vorbei zum Ventilsitz 3.

Angenommen, der Regelschieber befindet sich in einer Stellung, in der seine Dichtfläche nicht an dem Ventilsitz 3 anliegt. In diesem Fall strömt das Hochdruckgas aus dem Hochdruckraum 6 über den Ventilsitz 3, entlang dem Stift 25 in den Niederdruckraum 8.

Da die Membran 9 eine zentrale Öffnung 19 aufweist, strömt das Gas aus dem Niederdruckraum 8 über diese Öffnung 19 in die Ouerbohrung 27 der Madenschraube 10 und von dort in die Axialbohrung 12 der Madenschraube zum Auslaß 7 hin.

Wenn der an den Auslaß 7 angeschlossene Verbraucher vorübergehend kein Gas abnimmt, steigt der Druck im Auslaß 7 und damit auch im Niederdruckraum 8 an. Auf die Membran 9 wirkt von dem Niederdruckraum her eine Kraft, die gleich dem Produkt aus Hinterdruck und der Fläche der Membran ist. Von der Seite des Auslasses 7 wirkt auf die Membran 9 eine Kraft, die sich aus dem Produkt aus Hinterdruck und der Grundfläche des Zylinders 11 ergibt. Da die dem Niederdruckraum 8 zugewandte Fläche der Membran größer ist als die Grundfläche des Zylinders 11, wirkt auf die Membran eine durch den Anstieg des Druckes im Niederdruckraum erzeugte resultierende Kraft in Richtung auf den Auslaß 7, durch die die Membran 9 elastisch verformt wird. Dadurch wölbt sich die Membran in Richtung auf den Auslaß 7, entfernt sich also von dem Ventil 2.

Da der Regelschieber 4 durch die Druckfeder 23 in Richtung auf den Ventilsitz 3 vorgespannt ist, folgt er dieser Bewegung und verkleinert dadurch den Ringspalt zwischen dem Ventilsitz 3 und der Dichtfläche des Regelschiebers, so daß weniger Gas vom Hochdruckraum 6 in den Niederdruckraum 8 strömen kann, bis letztlich die Gaszufuhr völlig unterbunden wird, wenn der Regelschieber 4 an dem Ventilsitz 3 dicht anliegt.

Falls der Verbraucher erneut Gas über den Auslaß 7 entnimmt, fällt der Druck im Auslaß 7 und im Niederdruckraum ab, so daß sich die Membran aufgrund ihrer Eigenelastizität in Richtung auf ihre Gleichgewichtslage zurückformt. Dabei drückt das dem Ventil 2 zugewandte Ende der Madenschraube 10 gegen den Stift 25 und dieser hebt den Regelschieber 4 von seinem Ventilsitz 3 ab, so daß Gas erneut von dem Hochdruckraum 6 in den Niederdruckraum 8 einströmen kann.

Durch dieses Regelspiel kann der Hinterdruck am Auslaß 7 auf einem nahezu konstanten Wert gehalten werden.

Falls gewünscht ist, den Hinterdruck zu erhöhen oder abzusenken, wird die Madenschraube 10 gedreht. Dies muß allerdings erfolgen, bevor der Auslaß 7 verschraubt ist. Wird die Madenschraube eingeschraubt, derart daß sie sich in Richtung auf das Ventil 2 bewegt, so wird der effektive Abstand zwischen der Membran und dem Regelventil 2 verkleinert. Zum Schließen des Regelventils wird eine stärkere Verformung der Membran 9 in Richtung auf den Auslaß 7 und damit ein höherer Druck im Niederdruckraum 8 erforderlich. Der Druck im Niederdruckraum 8 wird somit ansteigen. Wird dagegen die Madenschraube 10 herausgedreht, wird ein geringerer Druck im Niederdruckraum 8 ausreichen, um den Regelschieber 4 gegen den Ventilsitz 3 zu führen. In diesem Fall wird der Hinterdruck geringer.

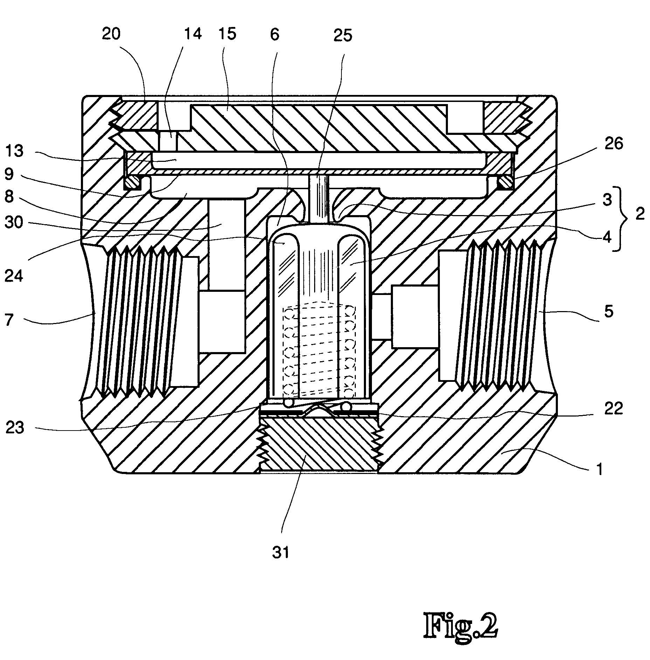

Figur 2 zeigt ein zweites Ausführungsbeispiel gemäß der Erfindung. In Figur 2 ist wieder das Gehäuse 1 zu erkennen, das einen koaxialen zylindrischen Niederdruckraum 6 aufweist, in dem der Regelschieber 4 angeordnet ist. Der Regelschieber 4 enthält wiederum eine Schließfeder 23, die sich auf einem Federzentriersitz 22 abstützt. Der Regelschieber 4 bildet mit dem in dem Gehäuse durch eine Verjüngung ausgebildeten Ventilsitz 3 ein Ventil 2. Die axiale Bohrung, die teilweise den Hochdruckraum 6 bildet, ist jedoch anders als im ersten Ausführungsbeispiel durch einen Stopfen 31 abgeschlossen. Als Einlaß 5 wirkt eine radiale Bohrung mit einem Innengewinde, die bis zu dem Hochdruckraum 6 reicht. Der Niederdruckraum 8 entspricht dem Niederdruckraum 8 in Figur 1 und ist ebenso wie dieser durch die Membran 9 abgeschlossen. Die Membran 9 ist wiederum gegen den O-Ring 26 mittels des Oberteils 15 verschraubt. Das Oberteil 15 ist wiederum durch einen Konterring 20 gesichert. Anders als im Ausführungsbeispiels der Figur 1 weist die Membran 9 jedoch keine Öffnung auf, so daß das Gas aus dem Niederdruckraum 8 über einen Längskanal 30 zum Auslaß 7 abgeleitet wird.

Auf der dem Niederdruckraum 8 abgewandten Seite der Membran 9 ist wieder ein Hohlraum 13 vorhanden, der über einen Kanal 14 mit der Außenluft in Verbindung steht.

Im Gegensatz zum Ausführungsbeispiel der Figur 1 kann der Hinterdruck des Druckminderers der Figur 2 nur durch die Bemessung der Länge des Stiftes 25 eingestellt werden. Wird der Stift 25 gekürzt, so reicht bereits ein vergleichsweise geringer Druck im Niederdruckraum 8 aus, um die Membran in einer solchen Weise zu verformen, daß sich der Regelschieber gegen den Ventilsitz 3 bewegt. Der Hinterdruck ist in diesem Falle vergleichsweise niedrig. Verwendet man dagegen einen längeren Stift, so muß ein größerer Druck im Niederdruckraum 8 herrschen, da die Membran stärker verformt werden muß, um den Regelschieber 4 auf den Ventilsitz 3 zu bewegen. Ein längerer Stift führt daher zu einem größeren Hinterdruck.

Der Druckminderer der Figur 2 eignet sich vorzüglich für Anwendungsfälle, in denen ein Druckminderer auf einen vorgegebenen festen Wert eingestellt sein muß und eine Änderung des Hinterdruckes in der Regel nicht erforderlich ist oder nur selten vorkommt. Er weist dafür jedoch den besonderen Vorteil einer besonders kompakten Bauweise auf.

Der Druck im Niederdruckraum 8 steht im Gleichgewicht mit der elastischen Federkraft der Membran 9 sowie der auf der Rückseite der Membran 9 wirkenden Außenluft. Die Eigenelastizität der Federmembran 9 ist so gewählt, daß die Membran durch Schwankungen des Druckes im Niederdruckraum 8 ausreichend verformt wird, um den Regelschieber in der oben beschriebenen Weise zu betätigen. Eine Druckunterstützung durch eine Vorspannfeder oder durch Druckluft ist nicht zwingend erforderlich.

Es wäre allerdings möglich, durch Beaufschlagung des Hohlraumes 13 mit einem Druckmedium eine Vorverformung der Membran 9 zum Zwecke der Einstellung des Hinterdruckes hervorzurufen. Entscheidend ist jedoch, daß die Eigenelastizität der Membran 9 den Hauptteil der Kraft bereitstellt, die zur Kompensation der Druckkraft aus dem Niederdruckraum erforderlich ist.

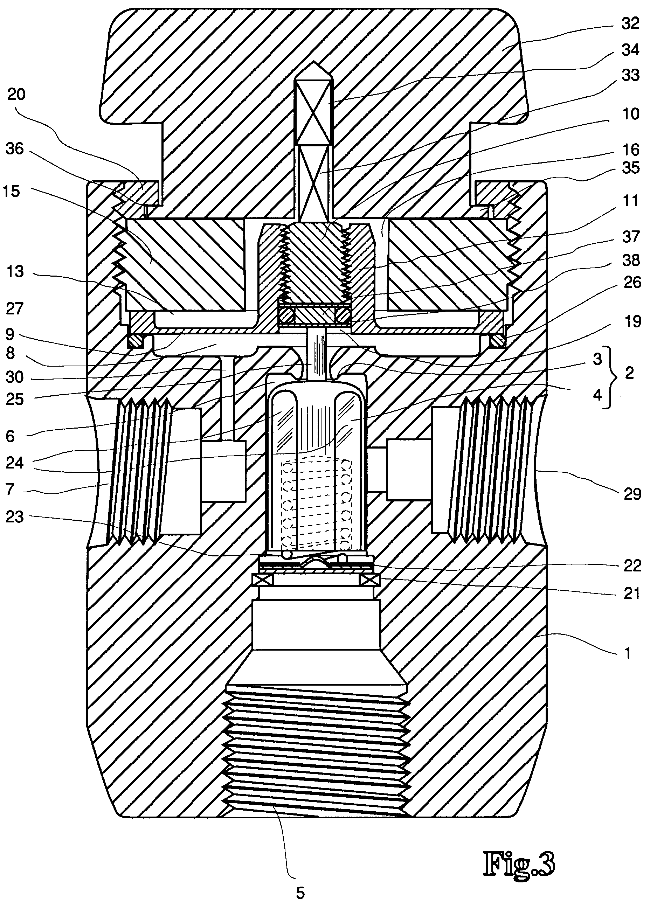

Figur 3 zeigt eine Ausführungsform, bei der der Hinterdruck auch nach Anschluß des Druckminderers jederzeit einstellbar ist. In Figur 3 ist das Gehäuse 1 von etwa zylindrischer Form und weist eine durchgehende zentrale Axialbohrung mit unterschiedlichen Durchmessern auf. Die durchgehende Axialbohrung bildet in dem in der Zeichnung unten dargestellten Teil eine Einlaßöffnung 5. Die Axialbohrung ist dort zur Aufnahme eines Einlaßstutzens mit einem Innengewinde versehen. Im Anschluß an den Einlaß 5 in Richtung auf das Innere des Gehäuses 1 weist die Axialbohrung eine Verjüngung auf sowie im Anschluß daran eine umlaufende Nut, in der ein Sprengring 21 angeordnet ist. Der Sprengring legt einen Federzentriersitz 22 in axialer Richtung fest. Der Federzentriersitz 22 trägt eine Druckfeder 23, die in eine zylindrische Sackbohrung des Regelschiebers 4 hineinragt. Der Regelschieber 4, der an vier Seiten Abflachungen 24 aufweist, sitzt in einem zylindrischen Teil der das Gehäuse 1 durchquerenden Axialbohrung, der den Hochdruckraum 6 darstellt. Der Regelschieber 4 wird durch die Druckfeder 23 in Richtung auf einen Ventilsitz 3 vorgespannt, der in dem Gehäuse 1 durch eine Verjüngungsstelle gebildet ist. Durch die Öffnung des kreisrunden Ventilsitzes 3 ragt ein Stift 25 des Regelschiebers 4 und erstreckt sich bis in einen Niederdruckraum 8, der die Form einer flachen Dose aufweist. Am Rand des Niederdruckraums 8 ist eine in Axialrichtung offene umlaufende Nut vorgesehen, in der ein O-Ring 26 angeordnet ist. Der Niederdruckraum 8 ist durch die Membran 9 begrenzt, die dicht gegen den O-Ring 26 gepreßt ist. Die Membran 9 weist die Form einer Kreisscheibe auf. Sie ist an ihrem Randbereich verstärkt. In der Mitte der Membran ist ein hohler Zylinder 11 angeordnet, der innenseitig mit einem Gewinde versehen ist.

In das Innengewinde des Zylinders 11 greift eine Madenschraube 10 ein. An dem dem Ventil 2 zugewandten Ende der Madenschraube 10 ist diese mit einem axial in dem Zylinder verschiebbaren Kolben 37 verbunden, der mittels eines Kolbendichtringes 38 gegen den Zylinder 11 abgedichtet ist. An ihrem dem Regelventil 2 abgewandten Ende weist die Madenschraube 10 einen Vierkantstift 33 auf. Die Membran 9 wird durch das Oberteil 15 gegen den O-Ring 26 gepreßt. Das Oberteil 15 ist in eine entsprechende Aufnahme des Gehäuses 1 einschraubbar und wird gegen Herausschrauben durch einen Konterring 20 gesichert.

Das Oberteil 15 ist im wesentlichen zylindrisch und weist eine zentrale Ausnehmung 16 auf, die zur Aufnahme des Zylinders 11 der Membran 9 geeignet ist. Mit seinem Außenrand drückt das Oberteil gegen den verstärkten Außenrand der Membran 9, so daß dieser mit dem O-Ring 26 eine dichte Verbindung herstellt.

Dadurch, daß der Außenrand der Membran gegenüber dem übrigen Teil der Membran 9 verstärkt ist, bildet sich zwischen dem Oberteil 15, das auf dem verstärkten Außenrand aufliegt, und der Membran 9 ein Hohlraum 13, der mit der Außenluft in Verbindung steht.

Der Konterring 20 weist an seinem Innenumfang eine hinterschnittene Ausnehmung 36 auf. In diese Ausnehmung greift ein Flansch 35 eines Handrades 32 ein, das auf diese Weise axial festgelegt, jedoch frei drehbar ist. Im Inneren des Handrades 32 ist koaxial eine Vierkantaufnahme 34 vorgesehen in die der Vierkantstift 33 der Madenschraube 10 eingreift. Durch Drehen des Handrades 32 kann somit zur Einstellung des Hinterdruckes die Madenschraube 10 verstellt werden.

Bei dieser Ausführungsform wird das Gas aus dem Niederdruckraum 8 über einen radialen Auslaß 7 abgeleitet, der über einen Längskanal 30 mit dem Niederdruckraum 8 in Verbindung steht.

Eine Radialbohrung 29, deren Durchmesser von außen nach innen fortschreitend abgestuft ist, führt zu dem zylindrischen Hochdruckraum 6, in dem der Regelschieber 4 angeordnet ist. In ihrem nach außen gelegenen Teil der Radialbohrung 29 ist diese mit einem Innengewinde versehen.

Der Druckminderer arbeitet wie folgt:
Mit seinem Einlaß 5 ist er in der Regel mit einem Gasflaschenventil oder einem Druckminderer verbunden, wie er in Figur 1 gezeigt ist. Dazu wird der Auslaß 7 des in Figur 1 gezeigten Druckminderers in den Einlaß 5 des in Figur 3 gezeigten Druckminderers eingeschraubt. Sein Auslaß 7 ist an eine Gasentnahmeleitung angeschlossen. Wie aus der Zeichnung ersichtlich, kann so ein zwei- oder mehrstufiger, besonders kompakter Druckminderer durch einfaches Aneinanderschrauben zweier oder dreier Druckminderer erzeugt werden.

Das Einstellen des gewünschten Druckes und das Regelspiel erfolgt wie im Zusammenhang mit Figur 1 beschrieben. Die Position der Madenschraube und somit der wirksame Abstand zwischen Membran und Regelventil läßt sich jederzeit durch Drehen des Handrades 32 ändern.

## Patentansprüche

1. Druckminderer mit einem in einem Gehäuse (1) angeordneten Ventil (2), das einen Ventilsitz (3) und einen in Richtung auf den Ventilsitz (3) vorgespannten Regelschieber (4) aufweist und das Innere des Gehäuses in einen stromaufwärts des Ventils (2) gelegenen mit einem Einlaß (5) verbundenen Hochdruckraum (6) und einen stromabwärts des Ventils (2) gelegenen, mit einem Auslaß (7) verbundenen Niederdruckraum (8) unterteilt, und mit einer auf den Regelschieber (4) wirkenden Membran (9), die durch den im Niederdruckraum (8) herrschenden variablen Druck beweglich ist, um in Abhängigkeit von dem im Niederdruckraum (8) herrschenden Druck die Bewegung des Regelschiebers (4) zu steuern, **dadurch gekennzeichnet**, daß die Membran (9) elastisch ausgebildet ist und eine Eigensteifigkeit aufweist, die ausreichend groß ist, um den Druck im Niederdruckraum (8) durch elastische Verformung zu kompensieren.

2. Druckminderer nach Anspruch 1, dadurch gekennzeichnet, daß an der Membran (9) ein einstellbares, auf den Regelschieber (4) gerichtetes Teil (10; 25) angeordnet ist.

3. Druckminderer nach Anspruch 2, dadurch gekennzeichnet, daß das einstellbare Teil eine Schraube (10) ist.

4. Druckminderer nach Anspruch 3, dadurch gekennzeichnet, daß die Schraube (10) in einem mit der Membran (9) einstückig gefertigten Zylinder (11) geführt ist.

5. Druckminderer nach Anspruch 4, dadurch gekennzeichnet, daß der Zylinder (11) koaxial zur Membran (9) angeordnet.

6. Druckminderer nach einem der Ansprüche 3 bis 5, dadurch gekennzeichnet, daß die Schraube (10) an ein Handrad (32) gekoppelt ist.

7. Druckminderer nach Anspruch 4 oder 5, dadurch gekennzeichnet, daß die Membran (9) im Bereich des Zylinders (11) eine Öffnung (19) aufweist, über die der Niederdruckraum (8) mit dem Auslaß (7) strömungsmäßig verbunden ist.

8. Druckminderer nach einem der Ansprüche 3 bis 7, dadurch gekennzeichnet, daß die Schraube (10) eine Axialbohrung (12) aufweist.

9. Druckminderer nach einem der Ansprüche 1 bis 8, dadurch gekennzeichnet, daß der Einlaß (5) koaxial zum Ventil (2) angeordnet ist.

10. Druckminderer nach einem der Ansprüche 1 bis 9, dadurch gekennzeichnet, daß der Auslaß (7) koaxial zum Ventil (2) angeordnet ist.

11. Druckminderer nach einem der Ansprüche 1 bis 10 dadurch gekennzeichnet, daß an der dem Niederdruckraum (8) abgewandten Seite der Membran (9) ein Hohlraum (13) vorgesehen ist, der mit einem Kanal (14) in Verbindung steht.

12. Druckminderer nach Anspruch 11, dadurch gekennzeichnet, daß der Kanal (14) mit der Außenluft in Verbindung steht.

13. Druckminderer nach Anspruch 11, dadurch gekennzeichnet, daß der Kanal (14) mit Druckluft beaufschlagbar ist.

14. Druckminderer nach einem der Ansprüche 1 bis 13, dadurch gekennzeichnet, daß die Membran (9) an ihrem Außenrand mittels eines Oberteils (15) eingespannt ist, und daß das Oberteil (15) eine den Zylinder (11) aufnehmende Buchse (16) aufweist.

15. Druckminderer nach Anspruch 14, dadurch gekennzeichnet, daß die Buchse (16) eine Ringnut (17) aufweist, in der eine Dichtung (18) angeordnet ist.
